(19) Europäisches Patentamt
European Patent Office
Office européen des brevets

(11) **EP 4 090 100 A1**

(12) **EUROPEAN PATENT APPLICATION**

(43) Date of publication:
**16.11.2022 Bulletin 2022/46**

(21) Application number: **22170539.5**

(22) Date of filing: **28.04.2022**

(51) International Patent Classification (IPC):
**H04W 72/02** (2009.01)     **H04W 72/04** (2009.01)

(52) Cooperative Patent Classification (CPC):
**H04W 72/02; H04W 72/0406**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2021 FI 20215546**

(71) Applicant: **Nokia Technologies Oy**
**02610 Espoo (FI)**

(72) Inventors:
• **Ji, Lianghai**
  **9220 Aalborg (DK)**
• **Kiilerich Pratas, Nuno Manuel**
  **9260 Gistrup (DK)**
• **Yu, Ling**
  **02700 Kauniainen (FI)**
• **Van Phan, Vinh**
  **90100 Oulu (FI)**

(74) Representative: **Kolster Oy Ab**
**Salmisaarenaukio 1**
**P.O. Box 204**
**00181 Helsinki (FI)**

(54) **COLLISION DETECTION IN SIDELINK GROUP COMMUNICATIONS**

(57)     This document discloses a solution for reporting detected transmission collisions by a terminal device. According to an aspect, a method for a terminal device comprises: configuring, by the terminal device, a decision rule for reporting a transmission collision in sidelink group communications amongst a group of terminal devices, wherein the decision rule comprises a deterministic function mapping a plurality of input parameters of the sidelink group communications to a binary output, detecting, by the terminal device, the transmission collision between transmissions of at least a first terminal device and a second terminal device of the group of terminal devices; inputting, by the terminal device from among the plurality of input parameters, at least one parameter of at least one of the apparatus, the first terminal device, and the second terminal device to the deterministic function and determining, by the terminal device on the basis of a binary output of the deterministic function resulting from the plurality of input parameters, whether to report or not to report the detected transmission collision; and in response to determining to report the transmission collision, transmitting by the terminal device a message indicating the transmission collision.

Fig. 2

**Description**

**Field**

Various embodiments described herein relate to the field of wireless communications and, particularly, to detecting collisions in sidelink group communications.

**Background**

Device-to-device or sidelink communications refer to communication scenarios where terminal devices of a cellular communication system utilize time-frequency resources of a serving cell to transmit messages directly amongst the terminal devices. In other words, the messages are delivered directly from a transmitting terminal device to one or more receiving terminal devices that have established sidelink communication links with one another. The transmissions may follow listen-before-talk (LBT) principle to sense the time-frequency resources for on-going transmissions before transmitting. When the number of terminal devices involved in the sidelink communications in the cell is high, the probability of colliding transmissions increases. Various mechanisms have been developed to address the problem of collisions but further work needs to be done.

**Brief description**

Some aspects of the invention are defined by the independent claims.

Some embodiments of the invention are defined in the dependent claims.

The embodiments and features, if any, described in this specification that do not fall under the scope of the independent claims are to be interpreted as examples useful for understanding various embodiments of the invention. Some aspects of the disclosure are defined by the independent claims.

According to an aspect, there is provided an apparatus for a terminal device, comprising means for performing: configuring a decision rule for reporting a transmission collision in sidelink group communications amongst a group of terminal devices, wherein the decision rule comprises a deterministic function mapping a plurality of input parameters of the sidelink group communications to a binary output, detecting the transmission collision between transmissions of at least a first terminal device and a second terminal device of the group of terminal devices; inputting, from among the plurality of input parameters, at least one parameter of at least one of the apparatus, the first terminal device, and the second terminal device to the deterministic function and determining, on the basis of a binary output of the deterministic function resulting from the plurality of input parameters, whether to report or not to report by the apparatus the detected transmission collision; and in response to determining that the apparatus is to report the transmission collision, causing the terminal device to transmit a message indicating the transmission collision.

In an embodiment, the detected transmission collision is a time-domain collision where transmissions by the first terminal device and second terminal device are on non-overlapping or partially overlapping frequency resources.

In an embodiment, the deterministic function is configured so that, for different combinations of the plurality of input parameters, a different subset of the group of terminal devices for detecting the transmission collision is configured to report the detected transmission collision.

In an embodiment, the deterministic function is configured so that, for each possible combination of the plurality of input parameters, at least two terminal devices of the group of terminal devices are configured to report the detected transmission collision.

In an embodiment, the plurality of input parameters comprises a priority of a transmission involved in the transmission collision, and wherein the deterministic function is configured so that, for a higher priority, a higher number of terminal devices of the group of terminal devices is configured to report the detected transmission collision.

In an embodiment, the plurality of input parameters comprises at least one parameter of each detected transmission involved in the transmission collision, and wherein the deterministic function is configured so that, for a higher number of detected transmissions involved in the transmission collision, a higher number of terminal devices of the group of terminal devices is configured to report the detected transmission collision.

In an embodiment, the at least one parameter of the at least one of the first terminal device and the second terminal device comprises an identifier of the first terminal device and an identifier of the second terminal device.

In an embodiment, the means are configured to determine, on the basis of at least one information element in a colliding transmission, whether the reporting of the detected collision is enabled or disabled and, in a condition of the reporting being enabled, performing said inputting and determining whether or not to report the detected collision; and in a condition of the reporting being disabled, omitting both said inputting and determining whether or not to report the detected collision.

In an embodiment, the detected transmission collision is between groupcast transmissions, and the apparatus is a recipient of none of the groupcast transmissions.

In an embodiment, the means comprises: at least one processor; and at least one memory including computer program code, wherein the at least one memory and computer program code are configured, with the at least one processor, to cause the above-described performance of the apparatus.

In another aspect, there is provided an apparatus comprising: at least one processor; and at least one memory including computer program code, wherein the at least one memory and computer program code are configured, with the at least one processor, to cause the apparatus to perform the following: configuring a decision rule for reporting a transmission collision in sidelink group communications amongst a group of terminal devices, wherein the decision rule comprises a deterministic function mapping a plurality of input parameters of the sidelink group communications to a binary output, detecting the transmission collision between transmissions of at least a first terminal device and a second terminal device of the group of terminal devices; inputting, from among the plurality of input parameters, at least one parameter of at least one of the apparatus, the first terminal device, and the second terminal device to the deterministic function and determining, on the basis of a binary output of the deterministic function resulting from the plurality of input parameters, whether to report or not to report by the apparatus the detected transmission collision; and in response to determining that the apparatus is to report the transmission collision, causing the terminal device to transmit a message indicating the transmission collision.

In an embodiment, the detected transmission collision is a time-domain collision where transmissions by the first terminal device and second terminal device are on non-overlapping or partially overlapping frequency resources.

In an embodiment, the deterministic function is configured so that, for different combinations of the plurality of input parameters, a different subset of the group of terminal devices for detecting the transmission collision is configured to report the detected transmission collision.

In an embodiment, the deterministic function is configured so that, for each possible combination of the plurality of input parameters, at least two terminal devices of the group of terminal devices are configured to report the detected transmission collision.

In an embodiment, the plurality of input parameters comprises a priority of a transmission involved in the transmission collision, and wherein the deterministic function is configured so that, for a higher priority, a higher number of terminal devices of the group of terminal devices is configured to report the detected transmission collision.

In an embodiment, the plurality of input parameters comprises at least one parameter of each detected transmission involved in the transmission collision, and wherein the deterministic function is configured so that, for a higher number of detected transmissions involved in the transmission collision, a higher number of terminal devices of the group of terminal devices is configured to report the detected transmission collision.

In an embodiment, the at least one parameter of the at least one of the first terminal device and the second terminal device comprises an identifier of the first terminal device and an identifier of the second terminal device.

In an embodiment, the at least one memory and computer program code are configured, with the at least one processor, to cause the apparatus to determine, on the basis of at least one information element in a colliding transmission, whether the reporting of the detected collision is enabled or disabled and, in a condition of the reporting being enabled, to perform said inputting and determining whether or not to report the detected collision; and in a condition of the reporting being disabled, to omit both said inputting and determining whether or not to report the detected collision.

In an embodiment, the detected transmission collision is between groupcast transmissions, and the apparatus is a recipient of none of the groupcast transmissions.

According to an aspect, there is provided a method for a terminal device, comprising: configuring, by the terminal device, a decision rule for reporting a transmission collision in sidelink group communications amongst a group of terminal devices, wherein the decision rule comprises a deterministic function mapping a plurality of input parameters of the sidelink group communications to a binary output, detecting, by the terminal device, the transmission collision between transmissions of at least a first terminal device and a second terminal device of the group of terminal devices; inputting, by the terminal device from among the plurality of input parameters, at least one parameter of at least one of the apparatus, the first terminal device, and the second terminal device to the deterministic function and determining, by the terminal device on the basis of a binary output of the deterministic function resulting from the plurality of input parameters, whether to report or not to report the detected transmission collision; and in response to determining to report the transmission collision, transmitting by the terminal device a message indicating the transmission collision.

The terminal device is different from the first terminal device and the second terminal device.

In an embodiment, the colliding transmissions are group transmissions, and the terminal device is a recipient of none of the colliding group transmissions.

In an embodiment, the deterministic function outputs an identifier per terminal device that is to report the transmission collision, upon detecting the transmission collision, and wherein the terminal device compares its own identifier with an output of the deterministic function and, upon detecting its own identifier in the output of the deterministic function, the terminal device transmits the message.

In an embodiment, the detected transmission collision is a time-domain collision where transmissions by the first terminal device and second terminal device are on non-overlapping or partially overlapping frequency resources.

In an embodiment, the deterministic function is configured so that, for different combinations of the plurality of input parameters, a different subset of the group of terminal devices for detecting the transmission collision is configured to report the detected transmission collision.

In an embodiment, the deterministic function is configured so that, for each possible combination of the plurality of input parameters, at least two terminal devices of the group of terminal devices are configured to report the detected transmission collision.

In an embodiment, the plurality of input parameters comprises a priority of a transmission involved in the transmission collision, and wherein the deterministic function is configured so that, for a higher priority, a higher number of terminal devices of the group of terminal devices is configured to report the detected transmission collision.

In an embodiment, the plurality of input parameters comprises at least one parameter of each detected transmission involved in the transmission collision, and wherein the deterministic function is configured so that, for a higher number of detected transmissions involved in the transmission collision, a higher number of terminal devices of the group of terminal devices is configured to report the detected transmission collision.

In an embodiment, the at least one parameter of the at least one of the first terminal device and the second terminal device comprises an identifier of the first terminal device and an identifier of the second terminal device.

In an embodiment, the terminal device determines, on the basis of at least one information element in a colliding transmission, whether the reporting of the detected collision is enabled or disabled and, in a condition of the reporting being enabled, performs said inputting and determining whether or not to report the detected collision; and in a condition of the reporting being disabled, omits both said inputting and determining whether or not to report the detected collision.

In an embodiment, the detected transmission collision is between groupcast transmissions, and the apparatus is a recipient of none of the groupcast transmissions.

According to an aspect, there is provided a computer program product embodied on a computer-readable medium and comprising a computer program code readable by a computer, wherein the computer program code configures the computer to carry out a computer process in a terminal device, the computer process comprising all the steps of the method of any one of the above-described embodiments.

**List of drawings**

Embodiments are described below, by way of example only, with reference to the accompanying drawings, in which

Figure 1 illustrates a wireless communication scenario to which some embodiments of the invention may be applied;
Figure 2 illustrates an embodiment of a flow diagram for determining whether or not to report a detected transmission collision;
Figure 3 illustrates a transmission collision to which some embodiments are directed;
Figure 4 illustrates inputs and output of a deterministic function according to an embodiment;
Figure 5 illustrates a signalling diagram for configuring and performing collision reporting according to an embodiment;
Figure 6 illustrates a flow diagram of another embodiment for determining whether or not to report a detected transmission collision; and
Figure 7 illustrates a block diagram of a structure of an apparatus according to an embodiment of the invention.

**Description of embodiments**

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. A person skilled in the art will realize that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

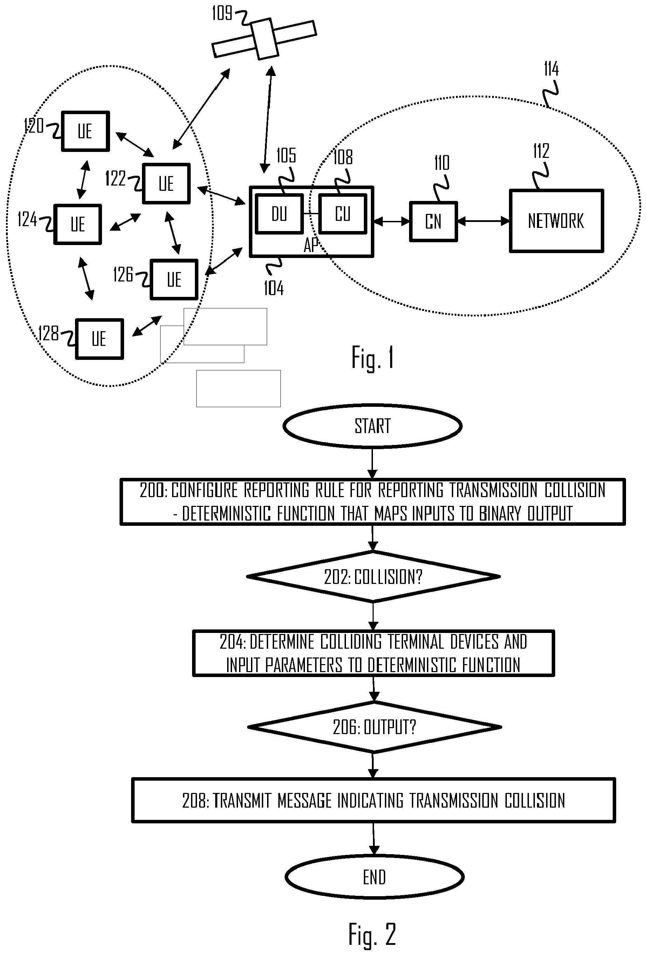

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows terminal devices or user devices 120 to 128 configured to be in a wireless connection on one or more communication channels in a cell with an access node (such as (e/g)NodeB) 104 providing the cell. (e/g)NodeB refers to an eNodeB or a gNodeB, as defined in 3GPP specifications. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used not only for signalling purposes but also for routing data from one (e/g)NodeB to another. The (e/g)NodeB is a computing device configured to control the radio resources of communication system it is coupled to. The NodeB may also be referred to as a base station, an access point, an access node, or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and typically fully centralized in the core network. The low-latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network or the Internet, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head (RRH) or base station comprising radio parts. It is also possible that node operations will be distributed among a plurality of servers, nodes or hosts. Application of cloudRAN architecture enables RAN real time functions being carried out at the RAN side (in a distributed unit, DU 105) and non-real time functions being carried out in a centralized manner (in a centralized unit, CU 108). Terminology in the literature may vary but, in some literature, the RRH corresponds to the DU 105. A single CU 108 may have multiple RRHs that are spatially remote with respect to one another, e.g. located at different geographical locations or antenna sites.

The CU 108 may have multiple RRHs. An interface between the CU and the RRH (or DU) is F1 interface in the 5G specifications. Such an arrangement enables the CU to employ, for example, spatially distributed multiple-input-multiple-output (MIMO) communications where the CU communicates with different terminal devices simultaneously over the same time-frequency resources via different RRHs. Each RRH may establish a spatial channel to one or more terminal devices served by the RRH, wherein the spatial channel may be substantially orthogonal (or at least distinguishable) with respect to one or more spatial channels formed by one or more other RRHs in the same time-frequency resources. Such a scenario may improve spectral efficiency.

It should also be understood that the distribution of functions between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or node B (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway, maritime, and/or aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 109 in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

As described in Background, sidelink communications is a feature of a modern cellular communication system that enables direct communication between terminal devices within proximity of one another in a cell or a coverage area of an access node that manages the sidelink communications. With respect to the definition of the sidelink, the term is analogous to what is meant with the term in the literature. A sidelink is an adaptation of a wireless standard that allows direct communication between terminal devices without going through an access node. The sidelink typically differs from the base standard at least on the physical layer. For example, 802.11p is based on 802.11 specifications but has some unique properties on the physical layer. In the same manner, PC5 is based on 3GPP specifications (LTE and 5G) but has some unique characteristics related to the difference between direct device-to-device communications and device-to-e/gNB communications. The sidelink is in the literature commonly associated with vehicular communications, such as vehicle-to-vehicle (V2V) or more generic vehicle-to-everything (V2X) communications. However, the sidelink communications are not limited thereto but can be configured amongst virtually any types of terminal devices.

As described in Background, as the number of devices involved in the sidelink communications within a limited area increases, so increases the probability of transmission collisions where two terminal devices transmit simultaneously. The transmitters of the colliding transmissions do not necessarily detect the collision, e.g. if they operate in a half-duplex mode. In particular, if the colliding transmissions include a transmission targeted to one of the two terminal devices, missing the collision may cause problems to an automatic repeat request process, for example. Since the terminal device did not detect the transmission, it is incapable of requesting a retransmission. Therefore, a third terminal device may be used to report the transmission collision. Below, embodiments for selecting the reporting terminal device are provided. The selection is important in many ways. From the perspective of the spectral efficiency, only a small set of reporting terminal devices (or a terminal device) may be preferable. On the other hand, it is desried that the selected terminal device(s) be able to detect the collision. Referring to Figure 1, the terminal device 120 may not be capable of detecting a transmission collision between the terminal devices 126 and 128.

Figure 2 illustrates an embodiment of a process for a terminal device involved in the sidelink communications. Referring to Figure 2, the process comprises as performed by an apparatus for the terminal device: configuring (block 200) a decision rule for reporting a transmission collision in sidelink group communications amongst a group of terminal devices, wherein the decision rule comprises a deterministic function for mapping a plurality of input parameters of the sidelink group communications to a binary output; detecting (block 202) the transmission collision between transmissions of at least a first terminal device and a second terminal device of the group of terminal devices; inputting (block 204), among the plurality of input parameters, at least one parameter of at least one of the apparatus, the first terminal device, and the second terminal device to the deterministic function and determining (block 206), on the basis of a binary output of the deterministic function resulting from the plurality of input parameters, whether or not the apparatus shall report the detected transmission collision; and upon determining in block 206 that the apparatus shall report the transmission collision, causing (block 208) the terminal device to transmit a message indicating the transmission collision.

The process of Figure 2 ensures that the deterministic function is performed by a terminal device that has detected the transmission collision, thereby solving the problem related to selecting a reporting device that cannot detect the collision. Further, the deterministic function enables explicit and precise control and configuration of the reporting terminal devices, compared with stochastic processes for performing the selection. The binary output provides a direct instruction for the terminal device to either report the collision or to omit the reporting. Accordingly, reliability in the reporting can be improved.

In the following, let us consider a situation where the terminal device (apparatus) carrying out the process of Figure 2 is the terminal device 124, the first terminal device is the terminal device 120, and the second terminal device is the terminal device 122. In such embodiments, the terminal device carrying out the process of Figure 2 and However, any one of these three terminal device may be any one of the terminal devices 120 to 128. The number of terminal devices operating within the same sidelink communication group may be substantially higher, e.g. dozens or even hundreds of terminal devices.

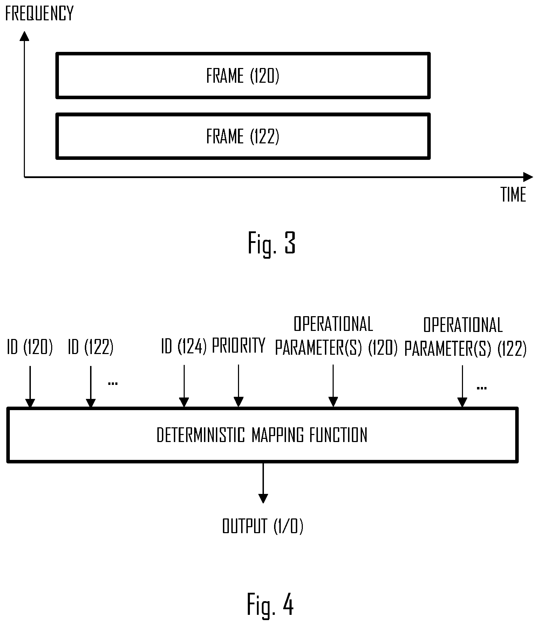

The transmission collision may occur in the overlapping time-frequency resources where the two (or more) transmissions interfere with one another. In such a case, the reception may not be possible in one or more terminal devices to which the transmissions are addressed. In such a case, hybrid automatic repeat request (HARQ) processes of the recipients may be capable of handling the transmission collision. Reporting in such cases may nevertheless be advantageous. In another scenario, the detected transmission collision is a time-domain collision where transmissions by the first terminal device and second terminal device are on non-overlapping frequency resources or on partially overlapping frequency resources. Figure 3 illustrates such a scenario. Accordingly, the first terminal device 120 and the second terminal device 122 each transmits a frame at least partially simultaneously but in non-overlapping frequency resources. Accordingly, the two frames will not interfere with one another, and the recipients capable of detecting the frame(s) may not trigger a retransmission, if frame decoding is successful. However, the frame transmitted by the terminal device 120 may be addressed to the terminal device 122, or the frame transmitted by the terminal device 122 may be addressed to the terminal device 120. If the terminal device 120, 122 operates in a half-duplex mode, it is incapable of detecting the frame addressed to it while it transmits the other colliding frame. Therefore, the HARQ process of the terminal device 120, 122 will not request retransmission of the frame. In such a case, the collision reporting may be even more important.

In an embodiment, the deterministic function may output for some, most, or all combinations of the input parameters, a subset of the group of terminal devices that shall report the detected collision. Therefore, the reporting may be disables for some terminal devices to reduce the signalling and to reduce power consumption. On the other hand, the deterministic function enables flexible configuration of the terminal devices that shall perform the reporting for different characteristics of collisions, as defined by the input parameters.

As described above, the deterministic function can be understood as a mapping function that maps the input parameter values into a binary output indicating whether or not the terminal device detecting the transmission collision shall report the collision. The deterministic function may be used for explicitly selecting the reporting terminal device(s) as well as limiting the number of reporting terminal devices. In an embodiment, the deterministic function is configured so that, for different combinations of the plurality of input parameters, a different subset of the group of terminal devices or the group of terminal devices detecting the transmission collision is configured to report the detected transmission collision. In other words, the deterministic function may be configured to select a varying set of one or more reporting terminal devices for each combination of the input parameter values. The function can be represented by:

$$f(m, n, k) = \begin{cases} 0, & \text{do not report the collision between link } n \text{ and link } m, \\ 1, & \text{report the collision between link } n \text{ and link } m. \end{cases}$$

where k refers to the terminal device detecting the collision in the process of Figure 2. In case the number of colliding transmissions is higher than two, the Equation can be generalized into the following form:

$$f(\Omega, k) = \begin{cases} 0, & \text{do not report the collision between link } n \text{ and link } m, \\ 1, & \text{report the collision between link } n \text{ and link } m. \end{cases}$$

where $\Omega$ is the set of colliding links, i.e. $\Omega = \{m, n, l, ...\}$.

In an embodiment, k may be an identifier of the terminal device performing the process of Figure 2, and the identifier may be provided by an upper layer or by the serving access node. The identifier may be a member identifier of the group, e.g. an identifier defined in the 3GPP specifications. In addition, m and n may be the identifiers used by the colliding transmitters, e.g. their member identifiers in the group or, alternatively, a transmitter/source identifier on Layer 2 (link layer) or Layer 1 (physical layer) comprised in the transmitted frame(s). Any other identifier identifying each terminal device within the group of terminal devices may be used.

By appropriately designing the deterministic function, flexibility and reliability may be provided to the reporting. As described above, for different properties of the transmission collision, a different set of reporting terminal devices may be generated. For example, when all the other input parameters are the same but the identifier of the detecting terminal device, a certain set of reporting terminal devices may be realized. However, when at least one other input parameter changes, even one, a completely different set of reporting terminal devices may be generated. Accordingly, a certain terminal device needs not to be fixed to report a collision of a determined transmitting terminal device. The deterministic function may provide full flexibility to the selection of the reporting terminal device(s). However, there may be structure and correlation between the identifiers of the transmitting terminal devices and the reporting terminal devices in the deterministic function.

In an embodiment, the deterministic function is configured so that, for at least some of the possible combinations of the plurality of input parameters, even to all of them, at least two terminal devices of the group of terminal devices are configured to report the detected transmission collision. This provides reliability for a case that one of the terminal devices that would be configured to report the collision is not capable of detecting the collision.

Figure 4 illustrates the deterministic (mapping) function and its various input parameters. As described above, at least the identifier of the terminal device executing the deterministic function in response to detecting the transmission collision may be used as an input parameter. Further input parameters may include identifiers of the terminal devices 120, 122. causing the transmission collision, or at least one input parameter per terminal device 120, 122 that have caused the transmission collision. The identifiers may be true identifiers of the terminal devices used to identify the terminal devices in the group, e.g. group member identifiers, link layer identifiers, or physical layer identifiers. In an embodiment, the terminal device inputs the identifiers of the colliding transmitters to the deterministic function and determines, on the basis of its output, whether or not to report the collision. The deterministic function may be represented as follows, for example:

$$P = \begin{cases} (m+n) \bmod GroupSize + 1, \text{if } k \text{ is not equal to } m \text{ or } n; \\ \text{next cyclic} - \text{shifted integer not equal to } ((m+n) \bmod GroupSize + 1), \end{cases}$$

else Where $k$ refers to the identifier of the terminal device carrying out the process of Figure 2, and GroupSize refers to the number of terminal devices in the group. In this case, the output of the function may be an identifier $P$ that the terminal device will compare with its own identifier $k$ If the terminal device determines $P=k$, it may determine to report the collision. If the terminal device determines $P \neq k$, it may determine to omit reporting of the detected collision. Alternatively, the output P may be a set of more than one identifier, and the terminal device may check whether or not its identifier k is included in the set $P$. If yes, the terminal device will trigger the reporting and, otherwise, omit the reporting.

In another embodiment, another function is used. An example of such a function is

$$P = \big((m+n) \times y\big) \bmod GroupSize + 1, \text{where } y = [1, 2, ..., N\_UEAs]$$

where N_UEAs is the maximum number of reporting terminal devices that may be preconfigured. The parameter N_UEAs may be configured to be higher than an expected maximum number of transmission collisions to account for situation where one of the reporting terminal devices is actually a terminal device causing the transmission collision. In this case too, the output of the function may again be the identifier or a set of identifiers of the terminal device(s) that shall report the collision, if detected. In this and the previous embodiment described immediately above, the deterministic function may be differently configured for different terminal devices so that the same input parameters (e.g. $m$ and $n$) provide different outputs at different terminal devices.

In an embodiment where the plurality of input parameters comprises at least one parameter of each detected transmission involved in the transmission collision, the deterministic function is configured so that, for a higher number of detected transmissions involved in the transmission collision, a higher number of reporting terminal devices is configured to report the detected transmission collision. Accordingly, the deterministic function increases the number of reporting terminal devices in proportion to the number of transmitting terminal devices that have caused the transmission collision. In this manner, it can be ensured that all the transmitting terminal devices are reported of the collision.

In an embodiment, the plurality of input parameters comprises a priority of a transmission involved in the transmission collision. The priority may be indicated in the transmitted frame included in the collision, or it may be known beforehand and associated with an identifier of a transmitting terminal device, for example. In such a case, the deterministic function may be configured so that, for a higher priority, a higher number of reporting terminal devices is configured to report the detected transmission collision. Accordingly, it can be ensured that collisions of high-priority transmissions will not go unnoticed.

In an embodiment, the parameters used as the inputs for the deterministic function include HARQ process identifiers of the colliding transmissions. In an embodiment, the parameters used as the inputs for the deterministic function include cyclic redundancy check (CRC) bits in the sidelink control information (SCI) of the colliding transmissions, e.g. the 1st stage SCI and/or the 2nd stage SCI). Since the CRC varies from one transmission to another, this can balance the reporting burden in a case where the same terminal devices continuously cause transmission collisions.

Yet another embodiment of the input parameter is the size of the sidelink communication group. The size may be used to balance the number of reporting terminal device and to scale the structure of the deterministic function.

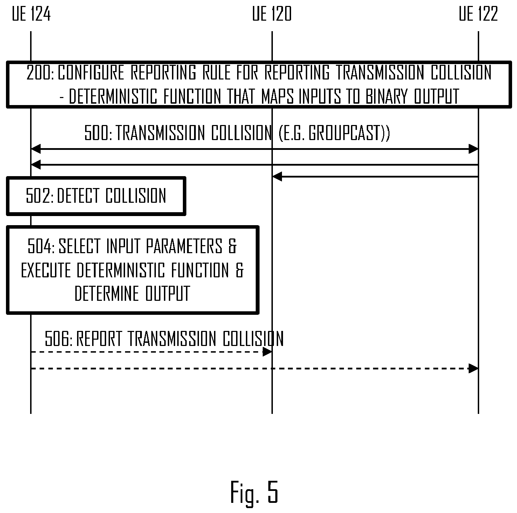

Let us then describe the configuration of the deterministic function and the operation within the group of terminal devices in the sidelink communications where the transmission collision occurs. Figure 5 illustrates a signalling diagram amongst messages transferred between the terminal devices 100 to 104. The diagram is simplified for the clarity of description and, in a real situation, the communication and the signalling may involve more terminal devices of the group, even all of them.

Referring to Figure 5, the deterministic function may be configured in block 200. The deterministic function may be hard-coded into the terminal devices, or at least some parts of it may be negotiated amongst the terminal devices (and access node) when setting up the sidelink communication group. Block 200 may be caried out on a higher protocol layer, e.g. on a non-access stratum (NAS) layer and/or application layer. In case of using signaling, a master or a group leader (terminal device) may configure the deterministic function. The master may consider operational conditions in the group such as the number of terminal devices in the group, a number of active transmitters in the group, a channel occupation ratio, etc. Accordingly, the deterministic function may be customized to the prevailing operational conditions in the sidelink communication group. This brings flexibility to the configuration and enables appropriate resourcing of the reporting terminal devices to various scenarios.

In step 500, the terminal devices 120, 122 transmit frames simultaneously, thus causing the transmission collision. The transmissions may both be groupcast transmissions, or at least one of the transmissions may be a unicast, multicast, or a broadcast transmission. The unicast transmission is a one-to-one transmission, while the broadcast transmission is not addressed to any receiver (or addressed to a broadcast address listened by every recipient). A groupcast transmission may refer to transmission to all members of a group, while the multicast transmission may refer to transmission to a subset of devices of the group. The terminal device 104 detects the collision in block 502 during monitoring of time-frequency resources of the sidelink communication group (e.g. PC5 interface).

In an embodiment, the frame(s) transmitted in step 500 comprise(s) at least one information element indicating whether or not the collision reporting is enabled for the frame(s), and/or how the reporting shall be implemented. As a consequence, upon detecting the transmission collision in block 502, the terminal device 124 may determine, on the basis of the at least one information element, whether the reporting of the detected collision is enabled or disabled. If the reporting is enabled, the terminal device may proceed with inputting the input parameters to the deterministic function and determining whether or not to report the detected collision (block 504). On the other hand, if the reporting is disabled, the terminal device may stop the reporting procedure and omit execution of the deterministic function.

In another embodiment, the enablement of the collision reporting is a static or semi-static parameter signalled by the master or the access node. Accordingly, the at least one information element may be comprised in a control message transmitted by the master or the access node, e.g. in sidelink control information (SCI) broadcasted by the master. When the deterministic function is disabled, the collision reporting may still be enabled. In such a case, the terminal devices may use a fallback reporting principle, e.g. so that all terminal device detecting a transmission collision shall report it.

The members of the group may be involved in the reporting but, in some embodiments, even non-members of the group may also be involved to improve the level of reporting. In an embodiment, the frame(s) transmitted in step 500 comprise(s) at least one information element indicating whether or not the collision reporting is enabled for terminal devices that are non-members of the group. In such a case, if the terminal device 124 is a member of the communication group of neither colliding transmission, it may, upon detecting the transmission collision, extract the information element and determine whether or not the collision reporting is enabled for the non-members. If not, the terminal device 124 may terminate the reporting process. Otherwise, it may proceed to block 504. Accordingly, the detected transmission collision may be between groupcast transmissions, and the terminal device detecting the collision may be a recipient of none of the groupcast transmissions.

Block 504 may be carried out according to any one of the above-described embodiments. Upon determining to perform the collision reporting, the terminal device may carry out step 506 where the terminal device reports the collision to transmitters of the colliding transmissions. The contents details of the report may follow the 3GPP specifications and are beyond the disclosure of this specification.

In an embodiment, every terminal device of the group stores and executes the process of Figure 2 by using the same deterministic function. From a perspective of a single terminal device, the deterministic function is thus shared with one or more or all other terminal devices of the group.

In an embodiment, the deterministic function is configured so that, at least in some situations, a plurality of terminal devices will carry out the reporting when detecting the same collision. The number of reporting terminal devices may depend on, for example, the priority of a connection involved in the collision or a number of terminal devices involved in a colliding transmission such that a greater number of reporting terminal devices is configured for a higher priority of the colliding connection or greater number of involved terminal devices in the colliding transmission.

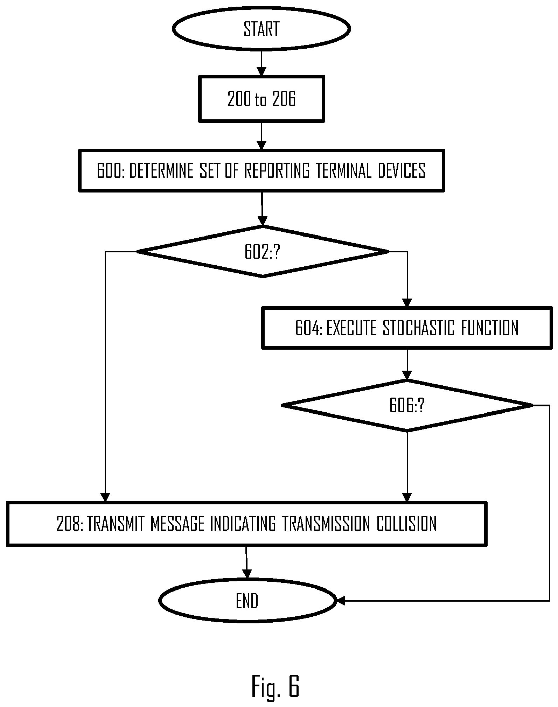

In an embodiment, further diversity is brought into the reporting by mandating, via the deterministic function, at least one terminal device to report and, further, configuring one or more terminal devices to carry out a stochastic process to determine whether or not to report the detected collision. Figure 6 illustrates such a procedure for the terminal device detecting the transmission collision. Referring to Figure 6, blocks 200 to 206 may be carried out according to any one of the above-described embodiments. Upon determining, on the basis of the output of the deterministic function, that the terminal device is not excluded from the reporting, the terminal device may determine the set of terminal devices that are neither excluded from the reporting (block 600). The deterministic function may be the same for the terminal devices of the group, and the terminal device may execute the deterministic function for the other terminal devices of the group, except for those that transmitted the colliding transmissions. Then, a rule for at least one mandatory reporting terminal device may be preset to determine one or more terminal devices that shall directly be mandated to report the collision. For example, the terminal device having the greatest or lowest identifier value may be mandated. Another simple rule may equally be provided. The terminal device may then, in block 602, determine whether or not its identifier is among the terminal device(s) that are directly mandated to report. If it is, the process proceeds to block 208. Otherwise, the process proceeds to block 604 where the terminal device executes a stochastic function to determine whether or not the perform the reporting. The stochastic function may be randomized at least to some degree. Accordingly, some of the terminal devices subjected to block 604 in the group may proceed to the reporting while others do not. In block 606, the terminal device determines, on the basis of the output of the stochastic function, whether or not to report the detected transmission collision. If the output indicates the reporting, the process proceeds to block 208. Otherwise, the process may end.

In an embodiment, the deterministic function is used to determine whether the terminal device shall carry out blocks 604 and 606 or to terminate the reporting. Accordingly, the binary output indicates whether the terminal device shall 'roll the dice' to determine whether or not to report the detected collision, or to directly terminate the process.

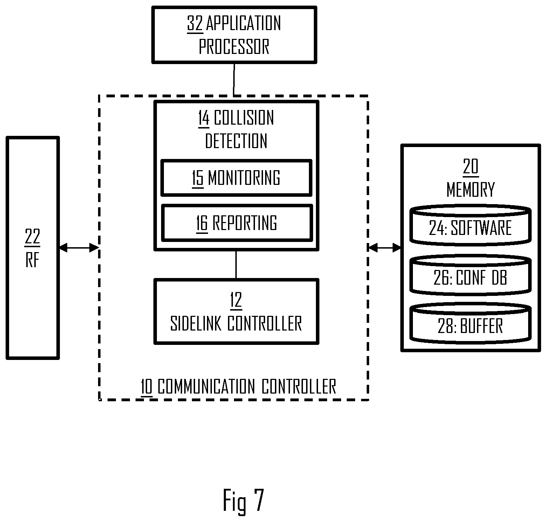

Figure 7 illustrates an embodiment of a structure of the above-mentioned functionalities of an apparatus executing the functions of the terminal device in the embodiments described above, e.g. the process of Figure 2 or any one of embodiments thereof. In an embodiment, the apparatus may be a circuitry or an electronic device realizing some embodiments of the invention in the terminal device. The apparatus carrying out the above-described functionalities may thus be comprised in such a device, e.g. the apparatus may comprise a circuitry such as a chip, a chipset, a processor, a micro controller, or a combination of such circuitries for the terminal device.

Referring to Figure 7, the apparatus may comprise a communication controller 10 providing the apparatus with capability of performing the above-described functions of the terminal device. In some embodiments, the apparatus may comprise a communication interface 22 configured to provide the apparatus with radio communication capability. The communication interface 22 may comprise an antenna or an antenna array, analogue radio frequency components required for the radio communications, and digital baseband signal processing components required to process received signals and to transmit the above-described frames or messages.

The communication controller 10 may comprise at least one processor or a processing circuitry. The apparatus may further comprise a memory 20 storing one or more computer program products 24 configuring the operation of said processor(s) of the apparatus. The memory 20 may be implemented using any suitable data storage technology, such as semiconductor-based memory devices, flash memory, magnetic memory devices and systems, optical memory devices and systems, fixed memory and removable memory. The memory 20 may further store a configuration database 26 storing operational configurations of the apparatus, e.g. the configuration of the deterministic function.

The communication controller 10 may comprise, as sub-circuitries or sub-modules, a sidelink communication controller 12 configured to configure establishment, operation, and termination of the sidelink communications of the apparatus. The sidelink communication controller 12 may be configured to establish the sidelink communication capability and configure the groupcast communications or other forms of sidelink communications according to the 3GPP specifications, for example. The communication controller 10 may further comprise, as configured by the sidelink communication controller 12, a collision detection circuitry 14. The collision detection circuitry may be configured to perform the process of Figure 2 or any one of the above-described embodiments of the process. The collision detection circuitry may comprise a channel monitoring circuitry 15 configured to monitor the time-frequency resources of the sidelink communication group and to determine whether or not collisions are detected. Upon detecting a collision, the channel monitoring circuitry may determine the terminal devices involved in the transmission collision, e.g. from the contents of the colliding transmissions (frames). An identifier of a transmitting terminal device may be comprised in the frames.

The collision detection circuitry may further comprise a collision reporting circuitry 16 configured to generate and transmit the collision report in the above-described manner. Upon being enabled by the collision detection circuitry in response to executing the deterministic function, the collision reporting circuitry 16 may be configured to generate the collision report and to transmit the collision report(s) to the terminal devices that were determined by the channel monitoring circuitry 15.

The apparatus may further comprise an application processor 32 executing one or more computer program applications that generate a need to transmit and/or receive data through the communication controller 30. The application processor may form an application layer of the apparatus. The application processor may execute computer programs forming the primary function of the apparatus. For example, if the apparatus is a sensor device, the application processor may execute one or more signal processing applications processing measurement data acquired from one or more sensor heads. If the apparatus is a computer system of a vehicle, the application processor may execute a media application and/or an autonomous driving and navigation application. The application processor may generate data to be transmitted in the wireless network.

As used in this application, the term 'circuitry' refers to one or more of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention. The processes or methods described in Figures 2 to 6 or any of the embodiments thereof may also be carried out in the form of one or more computer processes defined by one or more computer programs. A separate computer program may be provided in one or more apparatuses that execute functions of the processes described in connection with the Figures. The computer program(s) may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

Embodiments described herein are applicable to wireless networks defined above but also to other wireless networks. The protocols used, the specifications of the wireless networks and their network elements develop rapidly. Such development may require extra changes to the described embodiments. Therefore, all words and expressions should be interpreted broadly and they are intended to illustrate, not to restrict, the embodiment. It will be apparent to a person skilled in the art that, as technology advances, the inventive concept can be implemented in various ways. Embodiments are not limited to the examples described above but may vary within the scope of the claims.

**Claims**

1. An apparatus for a terminal device, comprising means for performing:

   configuring a decision rule for reporting a transmission collision in sidelink group communications amongst a group of terminal devices, wherein the decision rule comprises a deterministic function mapping a plurality of input parameters of the sidelink group communications to a binary output,
   detecting the transmission collision between transmissions of at least a first terminal device and a second terminal device of the group of terminal devices;
   inputting, from among the plurality of input parameters, at least one parameter of at least one of the apparatus, the first terminal device, and the second terminal device to the deterministic function and determining, on the basis of a binary output of the deterministic function resulting from the plurality of input parameters, whether to report or not to report by the apparatus the detected transmission collision; and
   in response to determining that the apparatus is to report the transmission collision, causing the terminal device to transmit a message indicating the transmission collision.

2. The apparatus of claim 1, wherein the detected transmission collision is a time-domain collision where transmissions by the first terminal device and second terminal device are on non-overlapping or partially overlapping frequency resources.

3. The apparatus of claim 1 or 2, wherein the deterministic function is configured so that, for different combinations of the plurality of input parameters, a different subset of the group of terminal devices for detecting the transmission collision is configured to report the detected transmission collision.

4. The apparatus of any preceding claim, wherein the deterministic function is configured so that, for each possible combination of the plurality of input parameters, at least two terminal devices of the group of terminal devices are configured to report the detected transmission collision.

5. The apparatus of any preceding claim, wherein the plurality of input parameters comprises a priority of a transmission involved in the transmission collision, and wherein the deterministic function is configured so that, for a higher priority, a higher number of terminal devices of the group of terminal devices is configured to report the detected transmission collision.

6. The apparatus of any preceding claim, wherein the plurality of input parameters comprises at least one parameter of each detected transmission involved in the transmission collision, and wherein the deterministic function is configured so that, for a higher number of detected transmissions involved in the transmission collision, a higher number of terminal devices of the group of terminal devices is configured to report the detected transmission collision.

7. The apparatus of any preceding claim, wherein the at least one parameter of the at least one of the first terminal device and the second terminal device comprises an identifier of the first terminal device and an identifier of the second terminal device.

8. The apparatus of any preceding claim, wherein the means are configured to determine, on the basis of at least one information element in a colliding transmission, whether the reporting of the detected collision is enabled or disabled and,

   in a condition of the reporting being enabled, performing said inputting and determining whether or not to report the detected collision; and
   in a condition of the reporting being disabled, omitting both said inputting and determining whether or not to report the detected collision.

9. The apparatus of any preceding claim, wherein the detected transmission collision is between groupcast transmissions, and the apparatus is a recipient of none of the groupcast transmissions.

10. The apparatus of any preceding claim, wherein said terminal device is different from the first terminal device and from the second terminal device.

11. A method for a terminal device, comprising:

   configuring, by the terminal device, a decision rule for reporting a transmission collision in sidelink group communications amongst a group of terminal devices, wherein the decision rule comprises a deterministic function mapping a plurality of input parameters of the sidelink group communications to a binary output,
   detecting, by the terminal device, the transmission collision between transmissions of at least a first terminal device and a second terminal device of the group of terminal devices;
   inputting, by the terminal device from among the plurality of input parameters, at least one parameter of at least one of the apparatus, the first terminal device, and the second terminal device to the deterministic function and determining, by the terminal device on the basis of a binary output of the deterministic function resulting from the plurality of input parameters, whether to report or not to report the detected transmission collision; and
   in response to determining to report the transmission collision, transmitting by the terminal device a message indicating the transmission collision.

12. The method of claim 11, wherein the terminal device determines, on the basis of at least one information element in a colliding transmission, whether the reporting of the detected collision is enabled or disabled and,

   in a condition of the reporting being enabled, performs said inputting and determining whether or not to report the detected collision; and
   in a condition of the reporting being disabled, omits both said inputting and determining whether or not to report the detected collision.

13. The method of claim 11 or 12, wherein the colliding transmissions are group transmissions, and the terminal device is a recipient of none of the colliding group transmissions.

14. The method of any preceding claim 11 to 13, wherein the deterministic function outputs an identifier per terminal device that is to report the transmission collision, upon detecting the transmission collision, and wherein the terminal device compares its own identifier with an output of the deterministic function and, upon detecting its own identifier in the output of the deterministic function, the terminal device transmits the message.

15. A computer program product embodied on a computer-readable medium and comprising a computer program code readable by a computer, wherein the computer program code configures the computer to carry out a computer process in a terminal device, the computer process comprising all the steps of the method of any preceding claim 11 to 14.

109

114

120 UE

122 UE

124 UE

126 UE

128 UE

105 108

104

110

112

DU CU
AP

CN

NETWORK

Fig. 1

START

200: CONFIGURE REPORTING RULE FOR REPORTING TRANSMISSION COLLISION
- DETERMINISTIC FUNCTION THAT MAPS INPUTS TO BINARY OUTPUT

202: COLLISION?

204: DETERMINE COLLIDING TERMINAL DEVICES AND
INPUT PARAMETERS TO DETERMINISTIC FUNCTION

206: OUTPUT?

208: TRANSMIT MESSAGE INDICATING TRANSMISSION COLLISION

END

Fig. 2

FREQUENCY

FRAME (120)

FRAME (122)

TIME

Fig. 3

ID (120)   ID (122)          ID (124) PRIORITY   OPERATIONAL              OPERATIONAL
                                                 PARAMETER(S) (120)       PARAMETER(S) (122)

...                                                                                            ...

DETERMINISTIC MAPPING FUNCTION

OUTPUT (1/0)

Fig. 4

UE 124                          UE 120                          UE 122

200: CONFIGURE REPORTING RULE FOR REPORTING TRANSMISSION COLLISION
- DETERMINISTIC FUNCTION THAT MAPS INPUTS TO BINARY OUTPUT

500: TRANSMISSION COLLISION (E.G. GROUPCAST))

502: DETECT COLLISION

504: SELECT INPUT PARAMETERS &
EXECUTE DETERMINISTIC FUNCTION &
DETERMINE OUTPUT

506: REPORT TRANSMISSION COLLISION

Fig. 5

START

200 to 206

600: DETERMINE SET OF REPORTING TERMINAL DEVICES

602:?

604: EXECUTE STOCHASTIC FUNCTION

606:?

208: TRANSMIT MESSAGE INDICATING TRANSMISSION COLLISION

END

Fig. 6

32 APPLICATION PROCESSOR

14 COLLISION DETECTION

15 MONITORING

16 REPORTING

12 SIDELINK CONTROLLER

10 COMMUNICATION CONTROLLER

22 RF

20 MEMORY

24: SOFTWARE

26: CONF DB

28: BUFFER

Fig 7

19

Europäisches
Patentamt

European
Patent Office

Office européen
des brevets

# EUROPEAN SEARCH REPORT

**Application Number**

EP 22 17 0539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LG ELECTRONICS: "Discussion on inter-UE coordination for Mode 2 enhancements", 3GPP DRAFT; R1-2103379, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210412 - 20210420 7 April 2021 (2021-04-07), XP052178122, Retrieved from the Internet: URL:https://ftp.3gpp.org/tsg_ran/WG1_RL1/T SGR1_104b-e/Docs/R1-2103379.zip R1-2103379 Discussion on inter-UE coordination for Mode 2 enhancements.docx [retrieved on 2021-04-07] | 1,2,7, 9-11,13, 15 | INV. H04W72/02 H04W72/04 |
| A | * Sub-section Q-2-1: page 12, section 2.2; page 13, paragraph before Proposal 11 and Proposal 11. Sub-section Q-2-2: pages 14 and 15; * ----- | 3-6,8, 12,14 | |
| | -/-- | | |

**TECHNICAL FIELDS SEARCHED (IPC)**

H04W

The present search report has been drawn up for all claims

| Place of search | Date of completion of the search | Examiner |
|---|---|---|
| The Hague | 9 September 2022 | Ferrandis-Ruiz, J |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

page 1 of 3

Europäisches
Patentamt

European
Patent Office

Office européen
des brevets

**EUROPEAN SEARCH REPORT**

Application Number

EP 22 17 0539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LG ELECTRONICS: "Discussion on feasibility and benefits for mode 2 enhancements", 3GPP DRAFT; R1-2100518, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210125 - 20210205 19 January 2021 (2021-01-19), XP051971027, Retrieved from the Internet: URL:https://ftp.3gpp.org/tsg_ran/WG1_RL1/TSGR1_104-e/Docs/R1-2100518.zip R1-2100518 Discussion on feasibility and benefits for mode 2 enhancements.docx [retrieved on 2021-01-19] | 1-4,6,8, 11,12, 14,15 | |
| A | * Sub-section Q-A2. Sub-section Q-A3. Sub-section Q-B2. * | 5,7,9, 10,13 | |

-----

-/--

TECHNICAL FIELDS
SEARCHED      (IPC)

The present search report has been drawn up for all claims

| Place of search | Date of completion of the search | Examiner |
|---|---|---|
| The Hague | 9 September 2022 | Ferrandis-Ruiz, J |

EPO FORM 1503 03.82 (P04C01)

page 2 of 3

Europäisches
Patentamt

European
Patent Office

Office européen
des brevets

## EUROPEAN SEARCH REPORT

Application Number

EP 22 17 0539

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERT BOSCH GMBH: "Discussion on Sidelink Mode-2 Resource Allocation Enhancements", 3GPP DRAFT; R1-2009127, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. E-Meeting; 20201026 – 20201113 24 October 2020 (2020-10-24), XP051946844, Retrieved from the Internet: URL:https://ftp.3gpp.org/tsg_ran/WG1_RL1/T SGR1_103-e/Docs/R1-2009127.zip R1-2009127 Bosch_Mode_2_Sidelink_Reliability_Enh.docx [retrieved on 2020-10-24] | 1,5,11, 15 | |
| A | * Section 2.2 * | 2-4, 6-10, 12-14 | |

_____

TECHNICAL FIELDS SEARCHED (IPC)

The present search report has been drawn up for all claims

| Place of search | Date of completion of the search | Examiner |
|---|---|---|
| The Hague | 9 September 2022 | Ferrandis-Ruiz, J |

EPO FORM 1503 03.82 (P04C01)